# EUROPEAN PATENT SPECIFICATION

(11) **EP 3 538 747 B1**
(45) Date of publication and mention of the grant of the patent: **01.03.2023**
(21) Application number: 17787925.1
(22) Date of filing: 25.10.2017
(51) Int. Cl.: F01M 11/10, F01M 1/16, F01M 5/00, F01M 1/10, F01M 1/02

(54) **METHOD FOR CONTROLLING THE SUPPLY OF OIL TO AN INTERNAL COMBUSTION ENGINE**
VERFAHREN ZUR STEUERUNG DER ÖLZUFUHR IN EINEN VERBRENNUNGSMOTOR
PROCÉDÉ DE RÉGULATION DE L'ALIMENTATION EN HUILE D'UN MOTEUR À COMBUSTION INTERNE

(30) Priority: 09.11.2016 IT 201600112687
(43) Date of publication of application: 18.09.2019
(73) Proprietor: Robert Bosch GmbH, 70442 Stuttgart (DE); Vhit S.P.A. Societa Unipersonale, 26010 Offanengo (IT)
(72) Inventor: CADEDDU, Leonardo, 26013 Crema (IT); MEYER-SALFELD, Steffen, 71229 Leonberg (DE); FAUDA, Alessandro, 24047 Treviglio (BG) (IT)
(74) Representative: Robba, Pierpaolo
(86) International application number: PCT/EP2017/077242
(87) International publication number: WO 2018/086881

(56) References cited:
- DE-A1-102016 100 211
- DE-A1-102016 100 211
- FR-A1- 2 961 252
- FR-A1- 2 961 252
- FR-A1- 2 997 995
- FR-A1- 2 997 995
- JP-A- H07 301 110
- JP-A- H07 301 110
- US-A1- 2010 236 227
- US-A1- 2010 236 227

## Description

The present invention relates to a method for controlling the supply of oil to an internal combustion engine, in particular for detecting clogging of the oil filter upstream of the engine or the degree of "fuel contamination" in the lubricant oil.

This method is applicable to a system for supplying oil to an internal combustion engine, for example in a motor vehicle.

These days, motor vehicles normally have a programme of scheduled maintenance according to the number of kilometres travelled or years of service. One of the scheduled operations is the replacement of the oil filter. Indeed, due to the functioning of the engine this tends to become clogged owing to metal residues resulting from the wear of pistons, piston rings, bearings, etc.

Said operation is scheduled on the basis of general statistical data which suggest when to replace the filter. However, these data do not take account of the specifics of the vehicle in question, which may require that said operation be brought forward to prevent serious damage to the engine or, conversely, may allow the operation to be postponed, for example if the vehicle is not used very often.

Another reason for wear of the engine may be related to high amounts of fuel in the oil, as this affects the lubricant properties of the oil. The presence of excessive amounts of fuel in the oil is particularly evident in common rail injection diesel engines. Indeed, with such engines, to regenerate the diesel particulate filter, even in some operating conditions in which the engine temperature is relatively moderate, diesel is introduced towards the end of the combustion cycle: the purpose of this is to avoid complete combustion in the cylinder, but to heat the exhaust gases with post-combustion so that these gases in turn regenerate the diesel particulate filter. Some of this excess fuel unfortunately flows into the oil passing through the piston rings of the piston (blow by).

It is therefore very important to be warned if there is too much fuel in the lubricant oil.

In this regard, the technical problem to be solved by the present invention is that of proposing a method for controlling the supply of oil to an internal combustion engine that overcomes the disadvantages of the prior art described above. US2010/236227 A1 is an example from the prior art, describing a method to assess the oil supply to an internal combustion engine.

The solution to the technical problem discussed and the specific aims are substantially achieved by a method for controlling the supply of oil to an internal combustion engine comprising the technical features claimed in claim 1, the dependent claims describe further advantageous features.

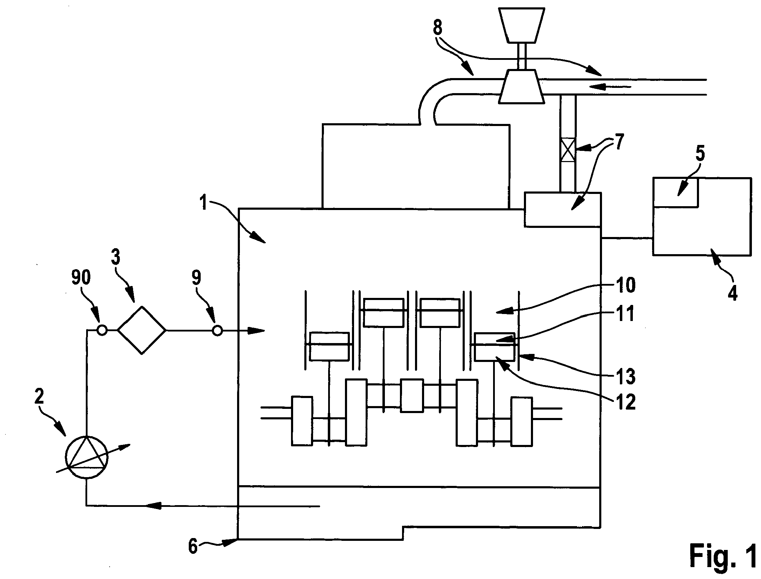

Further features and advantages of the present invention will become clearer from the description, which is provided by way of indication, and is therefore not limiting, of a preferred but not exclusive embodiment of a control method, as illustrated in the schematic view of figure 1.

The subject matter of the present invention is a method for controlling the supply of oil to an internal combustion engine. Said method comprises a procedure for detecting a potentially dangerous condition for the correct operation of an internal combustion engine 1. Said potentially dangerous condition for the correct operation of the engine 1 is the clogging of the oil filter 3 upstream of the engine 1 or the excessive presence of fuel in the lubricant oil. Both of these conditions have a negative effect in terms of wear on the engine. Clogging of the filter may cause drops in pressure that can compromise proper lubrication or a by-pass of said filter, while an excessive amount of fuel in the oil can reduce the lubricating capacity thereof (as mentioned above).

The procedure for detecting a potentially dangerous condition for the correct operation of the engine comprises the step of changing (at least by a pre-established value) the flow rate of oil that transits through a filter 3 and that is processed by a pump 2 for supplying oil to the engine. Preferably, the flow rate is changed by at least 20%. Said pump 2 takes oil from a tank (oil sump 6) to which it is subsequently returned (after passing through the engine 1). The filter 3 is placed upstream of the engine 1. Advantageously, it is positioned between the pump 2 and the engine 1. In particular, the step of changing the flow rate of oil envisages increasing or decreasing said flow rate. The change in flow rate must be sudden. For example, said change must take place within a few tenths of a second, for example around 0.2 seconds.

The step of changing the flow rate of oil by means of the pump 2 may be performed by causing a change in the capacity of the pump. In such a case, the pump 2 will have a variable capacity, for example a pump with an impeller moving inside a stator. To change the capacity of the pump it is in this case possible to move the stator and the rotation shaft of the rotor relative to one another.

Additionally or alternatively, the step of changing the flow rate of oil by means of the pump 2 envisages varying the number of revolutions of the pump 2 (for example in the case of an electric pump).

The abovementioned detection procedure also comprises the step of detecting the time that passes between changing the oil flow rate and a detection of a pre-established variation in a parameter connected at least with the pressure downstream of said filter 3.

According to the invention, this takes place at a predetermined frequency (for example at first start-up, when the vehicle is new or after the filter is replaced); moreover, it is performed with temperatures within a predetermined range (to ensure that the surrounding conditions are as similar as possible each time a detection is performed; this is because the hotter the oil, the more fluid it is); in this regard, an oil temperature sensor may be used (placed for example upstream of the engine 1).

The parameter connected with the pressure downstream of the filter 3 referred to above may be, for example:
- a pressure value supplied by a sensor 9 placed downstream of the filter; or
- a difference in pressure between downstream and upstream of the filter 3 (in which case, in addition to the sensor 9, use is made of an additional sensor 90 placed upstream of the filter 3) .

The variation in this parameter is a direct consequence of the change in the flow rate. If the flow rate of the pump 2 is changed, then the pressure varies downstream of the pump 2.

The pressure is typically measured in the main gallery of the system for conveying oil to the engine 1. Use is usually made of the pressure sensor 9 which is already provided in standard solutions. When the difference in pressure between downstream and upstream of the filter 3 is to be measured, the additional sensor 90, placed for example at the outlet of the pump 2, may be provided.

The abovementioned detection procedure also comprises the step of comparing with pre-established values the time that passes between changing the oil flow rate and a detection of the pre-established variation of the abovementioned parameter connected with pressure.

To be specific, if this time is above a pre-established threshold it means that the filter 3 should be replaced since it has a capping effect on the wave generated by the change in flow rate.

Moreover, information relating to the presence of fuel in the oil is also detected: the more fuel present in the oil, the more fluid the oil will be, therefore, the variation in flow rate will be acknowledged more quickly. The level of contamination of the oil by fuel may be identified in that for example it will be proportional to the delta pressure before and after the filter (which will change owing to the difference in fluidity of the oil). The level of contamination will be greater when driving in the urban cycle than when driving in the extra-urban cycle. When driving in demanding cycles, uphill or at high temperature, the temperatures promote evaporation, preventing the buildup of carbonaceous residues, which are abrasive. This is especially important in view of the fact that the accumulation of fuel in the oil (vehicle operating mainly in urban cycle) can reach values such that evaporation becomes impossible. All of this continuously degrades the oil with a consequent loss of lubricant power, with an increase in consumption and carbon dioxide emissions, as well as environmental pollution owing to early oil changes which, if not carried out, will lead to extreme wear on the engine. If, during the step of comparing said time with pre-established values, a fault is reported, it is transmitted:
- to an internal instrument inside the passenger compartment of a vehicle driven by the engine 1; or
- to a remote memory space to which access is possible via internet (for example the cloud).

More generally, information related to the time that passes between the variation in the flow rate and detection of the variation in pressure may be transmitted to an instrument inside the passenger compartment or to a remote memory space (hence, said information may be sent in any case, not just in the event of a fault).

Advantageously, the method further comprises a step of activating a reduction cycle of the level of fuel contamination in the oil (this would make it possible to evaporate the fuel which has flowed into the oil sump 6 even in mainly urban driving conditions). For the reasons given above, this condition may be seen as an undesirable consequence of the need to regenerate a diesel particulate filter placed downstream of the engine 1; this will however be counteracted. In this regard, the reduction cycle of the level of fuel contamination in the oil comprises the step of heating the oil, which brings about the evaporation of the fuel present in the oil.

For example, the step of heating the oil brings about the heating of the fluid present in an oil sump 6 from which the oil is taken by means of the pump 2 and to which it is returned after passing through the engine 1. In this case, the evaporation of the fluid present in the oil sump 6 causes the evaporated fuel to be conveyed into a combustion chamber 10 of the engine through an oil separator 7 and a fuel suction system 8. The oil separator 7 is in communication with the sump 8 and separates the evaporated fuel (which flows in the fuel suction system 8) from particles of oil present in the evaporated fluid which return to the sump 6.

Heating of the oil may be achieved in a number of ways. For example, the step of heating the oil may comprise the step of making the pump 2 operate in a mode in which it assumes a higher maximum capacity than the maximum capacity envisaged in the mapping of operation. In other words, in a first operating mode, the pump 2 has a mapping that envisages a first value for the maximum capacity; the step of heating the oil comprises the step of making the pump 2 operate in a second operating mode in which it assumes a higher maximum capacity than the maximum capacity envisaged in the first operating mode.

The step of heating the oil may comprise a step of opening a conduit connecting downstream and upstream of the pump 2 so that a part of the oil flow by-passes the engine 1. Therefore, an excess flow rate of the pump (the latter being preferably blocked at maximum capacity) flows in said conduit, not all to prevent engine operating problems. In this way, the oil circulating heats up.

The step of heating the oil may optionally envisage:
- raising, temporarily, a thermal threshold at which a heat exchanger for heating the oil is activated; or
- changing, temporarily, the thermoregulation system of the engine (calibrating it not at 90°-100°C but at 120°-150°C).

The method further comprises a procedure for tracking the successful change of an oil filter.

The tracking procedure comprises the steps of:
- periodically detecting through a sensor 9 the pressure downstream of the filter 3;
- retroactively adjusting at least, a first operating parameter of the pump 2 maintaining it on values that allow the pressure detected by the sensor 9 to be maintained within a prefixed range regardless of the degree of clogging of the filter (for example, this first operating parameter may be the rotation speed of the pump 2);
- monitoring the trend over time of the values of said at least one first parameter that allow the pressure detected by the sensor 9 to be maintained within a prefixed range regardless of the degree of clogging of the filter; this makes it possible to identify a variation of said values that is greater than a pre-established threshold in a range of time lower than a pre-established limit (to be specific, the replacement of a clogged filter with a new one causes a sharp reduction in pressure drops and hence the need to recalibrate the pump to keep the same level of pressure detected by the sensor 9);
- recording in memory means 4 associated with a control unit 5 the successful replacement of the filter 3 upon the detection of said variation (as mentioned above, said sharp variation indicates that there has been a variation in pressure drops and therefore it is deduced that the filter 3 has been replaced).

This provides, if necessary, evidence that the oil filter was replaced regardless of what has been recorded in the paper documents issued by the garage following maintenance. It is thus possible to prevent failure to replace the oil filter, whether this be owing to it being forgotten in good faith or owing to fraudulent reasons.

The present invention provides significant advantages.

First, it reduces costs and simplifies the method for identifying clogging of the oil filter and/or identifying the level of contamination of fuel in the oil. This is based on the use of mechanical pumps of variable capacity (MOP-VD) or electric pumps. Moreover, the need to replace the filter can be assessed on the basis of whether or not it is actually clogged and not with reference to statistical parameters, which are normally very conservative (thus, clearly, saving on running costs) .

The invention thus devised may be subject to a number of changes and variations, all of which come within the scope of the appended claims. In practice, all the materials used, as well as the dimensions, may be whatever is required in each case.

## Claims

1. A method for controlling the supply of oil to an internal combustion engine comprising a procedure for detecting a potentially dangerous condition for the correct operation of an internal combustion engine (1), said detection procedure comprising the steps of:
- changing the flow rate of oil that transits through the filter (3) and that is processed by a pump (2) for lubricating the engine (1);
- detecting the time that passes between changing the oil flow rate and a detection of a pre-established variation in a parameter connected at least with the pressure downstream of said filter (3), said variation being determined by said change of the flow rate, said filter (3) being placed upstream of the engine (1);
- comparing said time with pre-established values;
**characterized in that**
said time detection takes place at predetermined frequency and is performed with temperatures within a predetermined range,
said potentially dangerous condition for the correct operation of an internal combustion engine (1) being the clogging of the oil filter (3) upstream of the engine (1) or the excessive presence of fuel in the lubricant oil.

2. The method according to claim 1, **characterized in that** said step of changing the flow rate of oil that transits through the filter (3) and that is processed by a pump (2) for lubricating the engine (1) envisages changing the flow rate by at least 20% by either increasing or decreasing the said flow rate.

3. The method according to claim 2, **characterized in that** said time detection takes place at first start-up, when the vehicle is new or after the filter is replaced.

4. The method according to any one of the preceding claims, **characterized in that** said parameter connected with the pressure downstream of the filter (3) is a pressure difference between downstream and upstream of the filter (3).

5. The method according to any one of the preceding claims, **characterized in that** the step of changing the oil flow rate envisages varying the capacity of the pump (2).

6. The method according to any one of the preceding claims, **characterized in that** the step of changing the oil flow rate envisages varying the number of revolutions of the pump (2).

7. The method according to any one of the preceding claims, **characterized in that** it comprises a step of activating a reduction cycle of the level of fuel contamination in the oil; said cycle comprising the step of heating the oil, which brings about the evaporation of the fuel present in the oil.

8. The method according to claim 7, **characterized in that** the step of heating the oil brings about the heating of the fluid present in an oil sump (6) from which the latter is taken by the pump (2) and in which it is recirculated after passing into the engine (1); the evaporation of the fluid present in the oil sump causing the evaporated fuel to be conveyed into a combustion chamber (10) of the engine through an oil separator 5 (7) and a fuel suction system (8).

9. The method according to claim 7 or 8, **characterized in that** the pump (2) in a first operating method has a mapping that envisages a first value for the maximum capacity; the step of heating the oil comprises the step of making the pump (2) operate in a second operating mode in which it assumes a higher maximum capacity than the maximum capacity envisaged in the first operating mode.

10. The method according to claim 7 or 8 or 9, **characterized in that** the step of heating the oil comprises a step of opening a conduit connecting downstream and upstream of the pump (2) so that a part of the oil flow bypasses the engine (1) .

11. The method according to any one of the preceding claims, **characterized in that** if during the step of comparing said time with the pre-established values a fault is reported, it is transmitted:
- to an internal instrument inside the passenger compartment of a vehicle driven by the engine (1); or
- to a remote memory space to which access is possible via internet.

12. The method according to any one of the preceding claims, **characterized in that** it comprises a procedure for tracking the successful change of the oil filter (3) in turn comprising the steps of:
- periodically detecting through a sensor (9) the pressure downstream of the filter (3) ;
- retroactively adjusting at least a first operating parameter of the pump (2) maintaining it on values that allow the pressure detected by the sensor (9) to be maintained within a prefixed range regardless of the degree of clogging of the filter;
- monitoring the trend over time of the values of said at least one first parameter that allow the pressure detected by the sensor (9) to be maintained within a prefixed range regardless of the degree of clogging of the filter and to identify a variation of said values that is greater than a pre-established threshold in a range of time lower than a pre-established limit;
- recording in memory means (4) associated with a control unit (5) the successful replacement of the filter (3) upon the detection of said variation over a pre-established threshold.

## Patentansprüche

1. Verfahren zur Steuerung der Ölversorgung eines Verbrennungsmotors, das einen Ablauf zum Erkennen eines potentiell gefährlichen Zustands für den korrekten Betrieb eines Verbrennungsmotors (1) umfasst, wobei der Erkennungsablauf die folgenden Schritte umfasst:
- Veränderung der Durchflussmenge des Öls, das durch den Filter (3) fließt und von einer Pumpe (2) zur Schmierung des Motors (1) gefördert wird;
- Erfassen der Zeit, die zwischen der Änderung des Öldurchflussmenge und der Erfassung einer vorher festgelegten Änderung eines Parameters vergeht, der zumindest mit dem Druck auf der dem Filter (3) nachgelagerten Seite zusammenhängt, wobei die Änderung durch die Änderung der Durchflussmenge bestimmt wird und der Filter (3) dem Motor (1) vorgelagert angeordnet ist;
- Vergleich der Zeit mit vorher festgelegten Werten;
**dadurch gekennzeichnet, dass**
die Zeiterfassung mit einer vorgegebenen Häufigkeit erfolgt und bei Temperaturen innerhalb eines vorgegebenen Bereichs durchgeführt wird,
der potentiell gefährliche Zustand für den korrekten Betrieb eines Verbrennungsmotors (1) das Verstopfen des Ölfilters (3) auf der dem Motor (1) vorgelagerten Seite oder das übermäßige Vorhandensein von Kraftstoff im Schmieröl ist.

2. Verfahren nach Anspruch 1,
**dadurch gekennzeichnet, dass**
der Schritt der Änderung der Durchflussmenge des Öls, das den Filter (3) durchläuft und von einer Pumpe (2) zur Schmierung des Motors (1) gefördert wird, eine Änderung der Durchflussmenge um mindestens 20 % vorsieht, indem die Durchflussmenge entweder erhöht oder verringert wird.

3. Verfahren nach Anspruch 2,
**dadurch gekennzeichnet, dass**
die Zeiterfassung bei der ersten Inbetriebnahme erfolgt, wenn das Fahrzeug neu ist oder nachdem der Filter ausgetauscht wurde.

4. Verfahren nach einem der vorhergehenden Ansprüche,
**dadurch gekennzeichnet, dass**
der mit dem Druck auf der nachgelagerten Seite des Filters (3) verbundene Parameter eine Druckdifferenz zwischen der vorgelagerten Seite und der nachgelagerten Seite des Filters (3) ist.

5. Verfahren nach einem der vorhergehenden Ansprüche,
**dadurch gekennzeichnet, dass**
der Schritt der Änderung der Öldurchflussmenge die Änderung der Leistung der Pumpe (2) vorsieht.

6. Verfahren nach einem der vorangehenden Ansprüche,
**dadurch gekennzeichnet, dass**
der Schritt der Änderung des Öldurchflussmenge die Änderung der Drehzahl der Pumpe (2) vorsieht.

7. Verfahren nach einem der vorhergehenden Ansprüche,
**dadurch gekennzeichnet, dass**
ein Schritt zur Aktivierung eines Zyklus zur Verringerung des Verschmutzungsgrads des Öls umfasst ist; der Zyklus den Schritt der Erwärmung des Öls umfasst, der die Verdampfung des im Öl vorhandenen Kraftstoffs bewirkt.

8. Verfahren nach Anspruch 7,
**dadurch gekennzeichnet, dass**
der Schritt der Erwärmung des Öls die Erwärmung der in einer Ölwanne (6) vorhandenen Flüssigkeit bewirkt, aus der diese von der Pumpe (2) entnommen und in die sie nach dem Eintritt in den Motor (1) zurückgeführt wird; die Verdampfung der in der Ölwanne vorhandenen Flüssigkeit die Beförderung des verdampften Kraftstoffs in eine Verbrennungskammer (10) des Motors durch einen Ölabscheider 5 (7) und ein Kraftstoffansaugsystem bewirkt.

9. Verfahren nach Anspruch 7 oder 8,
**dadurch gekennzeichnet, dass**
die Pumpe (2) in einem ersten Betriebsverfahren eine Zuordnung aufweist, die einen ersten Wert für die maximale Kapazität vorsieht; der Schritt des Erwärmens des Öls den Schritt umfasst, die Pumpe (2) in einem zweiten Betriebsmodus arbeiten zu lassen, in dem sie eine höhere maximale Kapazität annimmt als die im ersten Betriebsmodus vorgesehene maximale Kapazität.

10. Verfahren nach Anspruch 7 oder 8 oder 9,
**dadurch gekennzeichnet, dass**
der Schritt des Erwärmens des Öls einen Schritt des Öffnens einer Leitung umfasst, die die nachgelagerte Seite und die vorgelagerte Seite der Pumpe (2) verbindet, so dass ein Teil des Ölflusses den Motor (1) umgeht.

11. Verfahren nach einem der vorhergehenden Ansprüche,
**dadurch gekennzeichnet, dass**
wenn während des Schritts des Vergleichs der Zeit mit den vorher festgelegten Werten eine Störung gemeldet wird, diese übermittelt wird:
- an ein internes Instrument im Fahrgastraum eines von dem Motor (1) angetriebenen Fahrzeugs; oder
- auf einen fernen Speicherplatz, auf den der Zugriff über das Internet möglich ist.

12. Verfahren nach einem der vorhergehenden Ansprüche,
**dadurch gekennzeichnet, dass**
es einen Ablauf zur Verfolgung des erfolgreichen Wechsels des Ölfilters (3) umfasst, das wiederum die folgenden Schritte umfasst:
- periodische Erfassung des Drucks auf der nachgelagerten Seite des Filters (3) durch einen Sensor (9);
- nachträgliche Einstellung mindestens eines ersten Betriebsparameters der Pumpe (2), wobei diese auf Werten gehalten wird, die es ermöglichen, den vom Sensor (9) erfassten Druck unabhängig vom Grad der Verstopfung des Filters in einem vorgegebenen Bereich zu halten;
- Überwachen der zeitlichen Entwicklung der Werte des mindestens einen ersten Parameters, die es ermöglichen, den vom Sensor (9) erfassten Druck unabhängig vom Grad der Verstopfung des Filters innerhalb eines vorgegebenen Bereichs zu halten, und Identifizieren einer Veränderung der Werte, die größer ist als ein vorgegebener Schwellenwert in einem Zeitbereich, der kleiner ist als eine vorgegebene Grenze;
- Aufzeichnung des erfolgreichen Austauschs des Filters (3) in einem Speichermedium (4), das mit einer Steuereinheit (5) verbunden ist, wenn die Abweichung über einem vorher festgelegten Grenzwert festgestellt wird;
- Aufzeichnen des erfolgreichen Austauschs des Filters (3) in einem Speichermedium (4), das mit einer Steuereinheit (5) verbunden ist, wenn die Abweichung über einem vorher festgelegten Schwellenwert festgestellt wird.

## Revendications

1. Procédé de commande de l'alimentation en huile d'un moteur à combustion interne comprenant une procédure de détection d'une condition potentiellement dangereuse pour le fonctionnement correct d'un moteur à combustion interne (1), ladite procédure de détection comprenant les étapes de :
- changement du débit d'une huile qui transite à travers le filtre (3) et qui est traitée par une pompe (2) pour lubrifier le moteur (1) ;
- détection du temps qui passe entre le changement du débit d'huile et une détection d'une variation préétablie d'un paramètre lié au moins à la pression en aval dudit filtre (3), ladite variation étant déterminée par ledit changement du débit, ledit filtre (3) étant placé en amont du moteur (1) ;
- comparaison dudit temps à des valeurs préétablies ;
**caractérisé en ce que** ladite détection de temps a lieu à une fréquence prédéterminée et est effectuée avec des températures dans une plage prédéterminée,
ladite condition potentiellement dangereuse pour le fonctionnement correct d'un moteur à combustion interne (1) étant le colmatage du filtre à huile (3) en amont du moteur (1) ou la présence excessive de carburant dans l'huile lubrifiante.

2. Procédé selon la revendication 1, **caractérisé en ce que** ladite étape de changement du débit d'une huile qui transite à travers le filtre (3) et est traitée par une pompe (2) pour lubrifier le moteur (1) envisage de changer le débit d'au moins 20 % en augmentant ou en diminuant ledit débit.

3. Procédé selon la revendication 2, **caractérisé en ce que** ladite détection de temps a lieu à un premier démarrage, lorsque le véhicule est neuf ou après remplacement du filtre.

4. Procédé selon l'une quelconque des revendications précédentes, **caractérisé en ce que** ledit paramètre lié à la pression en aval du filtre (3) est une différence de pression entre l'aval et l'amont du filtre (3).

5. Procédé selon l'une quelconque des revendications précédentes, **caractérisé en ce que** l'étape de changement du débit d'huile envisage de faire varier la capacité de la pompe (2).

6. Procédé selon l'une quelconque des revendications précédentes, **caractérisé en ce que** l'étape de changement du débit d'huile envisage de faire varier le nombre de tours de la pompe (2).

7. Procédé selon l'une quelconque des revendications précédentes, **caractérisé en ce qu'**il comprend une étape d'activation d'un cycle de réduction du niveau de contamination de carburant dans l'huile ; ledit cycle comprenant l'étape de chauffage de l'huile, qui entraîne l'évaporation du carburant présent dans l'huile.

8. Procédé selon la revendication 7, **caractérisé en ce que** l'étape de chauffage de l'huile entraîne le chauffage du fluide présent dans un carter d'huile (6) d'où ce dernier est prélevé par la pompe (2) et dans lequel il est mis à circuler à nouveau après passage dans le moteur (1) ; l'évaporation du fluide présent dans le carter d'huile provoquant le transport du carburant évaporé dans une chambre de combustion (10) du moteur par le biais d'un séparateur d'huile (7) et d'un système d'aspiration de carburant (8).

9. Procédé selon la revendication 7 ou 8, **caractérisé en ce que** la pompe (2) dans un premier procédé de fonctionnement a une cartographie qui envisage une première valeur pour la capacité maximale ; l'étape de chauffage de l'huile comprend l'étape amenant la pompe (2) à fonctionner dans un second mode de fonctionnement où elle adopte une capacité maximale plus élevée que la capacité maximale envisagée dans le premier mode de fonctionnement.

10. Procédé selon la revendication 7 ou 8 ou 9, **caractérisé en ce que** l'étape de chauffage de l'huile comprend une étape d'ouverture d'une conduite reliant l'aval et l'amont de la pompe (2) de sorte qu'une partie du flux d'huile contourne le moteur (1).

11. Procédé selon l'une quelconque des revendications précédentes, **caractérisé en ce que**, si pendant l'étape de comparaison dudit temps aux valeurs préétablies un défaut est signalé, il est transmis :
- à un instrument interne à l'intérieur de l'habitacle passager d'un véhicule entraîné par le moteur (1) ; ou
- à un espace de mémoire distant dont l'accès est possible via Internet.

12. Procédé selon l'une quelconque des revendications précédentes, **caractérisé en ce qu'**il comprend une procédure de suivi du changement réussi du filtre à huile (3) comprenant quant à elle les étapes de :
- détection périodique par le biais d'un capteur (9) de la pression en aval du filtre (3) ;
- ajustement rétroactif d'au moins un premier paramètre de fonctionnement de la pompe (2) le maintenant à des valeurs qui permettent de maintenir la pression détectée par le capteur (9) dans une plage préfixée quel que soit le degré de colmatage du filtre ;
- surveillance de la tendance dans le temps des valeurs dudit au moins un premier paramètre qui permettent de maintenir la pression détectée par le capteur (9) dans une plage préfixée quel que soit le degré de colmatage du filtre et d'identifier une variation desdites valeurs qui est supérieure à un seuil préétabli dans une plage de temps inférieure à une limite préétablie ;
- enregistrement dans un moyen de mémoire (4) associé à une unité de commande (5) du remplacement réussi du filtre (3) lors de la détection de ladite variation au-dessus d'un seuil préétabli.
